Europäisches Patentamt

European Patent Office

Office européen des brevets

(19)

(11) EP 0 932 074 A1

(12) EUROPEAN PATENT APPLICATION
published in accordance with Art. 158(3) EPC

(43) Date of publication:
28.07.1999 Bulletin 1999/30

(51) Int. Cl.$^6$: G02F 1/35, G02F 1/37

(21) Application number: 97941273.1

(86) International application number:
PCT/JP97/03470

(22) Date of filing: 29.09.1997

(87) International publication number:
WO 98/14827 (09.04.1998 Gazette 1998/14)

(84) Designated Contracting States:
DE FR GB IT NL SE

(30) Priority: 04.10.1996 JP 26418396

(71) Applicants:
• Toyota Jidosha Kabushiki Kaisha
Toyota-shi, Aichi-ken 471-71 (JP)
• Toyota School Foundation
Nagoya-shi, Aichi-ken 468 (JP)

(72) Inventors:
• FUJIWARA, Takumi,
Toyota School Foundation
Nagoya-shi, Aichi-ken 468 (JP)

• TAKAHASHI, Masahide,
Toyota School Foundation
Nagoya-shi, Aichi-ken (JP)
• IKUSHIMA, Akira,
Toyota School Foundation
Nagoya-shi, Aichi-ken 468 (JP)

(74) Representative:
Leson, Thomas Johannes Alois, Dipl.-Ing.
Patentanwälte
Tiedtke-Bühling-Kinne & Partner,
Bavariaring 4
80336 München (DE)

(54) **SILICA GLASS MATERIAL HAVING SECOND ORDER OPTICAL NONLINEARITY AND ITS MANUFACTURING METHOD**

(57) Ge density of a core portion (10a) is greater than 12% and less than or equal to 30 mol%. The voltage to be applied in UV-excited poling is in a range of $1\times10^5$ to $8\times10^5$V/cm. With this arrangement, optical non-linearity of 2.5pm/V or more as an optical non-linearity constant d is imparted to $SiO_2$-based glass material. As a result, an optical functional element, such as an optical switch, can be made using the glass material.

Fig. 1

EP 0 932 074 A1

**Description**

TECHNICAL FIELD

The present invention relates to $SiO_2$ (Silica)-based glass material having second-order optical non-linearity and a method for manufacturing the material. In particular, the present invention relates to the content of Germanium (Ge).

BACKGROUND ART

With an increasing need for large-volume information transmission, information transmission using light, such as optical fibers, has found increasingly wider use. Such information transmission systems require various optical functional elements. To manufacture such optical functional elements, materials having second-order optical non-linearity are critical.

As materials having second-order optical non-linearity, crystalline materials such as $LiNbO_3$ are widely utilized. Meanwhile, it is desirable to use glass material in terms of a stable connection with a glass optical fiber, low loss of the transmitted light, low cost, and a wide rage of transmitting wavelength. Glass materials, however, generally do not have second-order optical non-linearity and, therefore, cannot be used for this purpose. However, a proposal has been made regarding a method for imparting second-order optical non-linearity to glass materials.

For example, in WO96/16344, it is proposed that second-order optical non-linearity is imparted to $SiO_2$-based glass materials through UV-excited poling. This document describes that UV-excited poling is carried out while applying an electric field of $8\times10^5$V/cm across $SiO_2$-based glass materials doped with Ge of 12 mol%, to thereby impart second-order optical non-linearity with an electro-optical (EO) coefficient r being 6pm/V. It should be noted that the above document defines, in its claims, the value $10^4$-$10^7$V/cm for the magnitude of an electric field to be applied in UV-excited poling, and actually employs, in its preferred embodiment, an electric field of $8\times10^5$V/cm.

Here, it is known that an EO coefficient r and a second-order optical non-linearity susceptibility $\chi^{(2)}$ hold the relationship expressed by the expression (1).

$$r=-(2\chi^{(2)})/n^4 \tag{1}$$

wherein n is a refractive index. Also, a constant d, which is generally used in wavelength conversion for SHG (second harmonic waves) elements or the like, can be expressed as $d=(1/2)\chi^{(2)}$.

However, the above expression (1) does not necessarily coincide with the relationship held between actual measurements of r and d. Table 1 shows actual measurements of r and d with respect to various non-linear optical materials (oxides), and $d_t$ values which are calculated based on the actual measurements of r by using the above relational expression. It is understood also from this table that actual measurements and calculated values do not necessarily match. It should be noted that the values shown in Table 1 are based on the data disclosed in A. Yariv and P. Yeh, "Optical Waves in Crystals" (John Wiley & Sons, New York) P. 230, P.513, and other data, and shows the magnitude only without consideration of sign.

Table 1

|  | r (measured value) pm/V | d (measured value) pm/V | dt (calculated value) pm/V | N (refractive index) |
|---|---|---|---|---|
| $LiNbO_3$ | $r_{33}$:32 | $d_{33}$:30 | $d_{t33}$:187 |  |
|  | $r_{13}$:10 | $d_{13}$:4.7 | $d_{t13}$:59 | 2.2 |
|  | $r_{22}$:6.7 | $d_{22}$:3.2 | $d_{t22}$:39 |  |
| $LiTaO_3$ | $r_{33}$:33 | $d_{33}$:28 | $d_{t33}$:188 | 2.14 |
| $KH_2PO_4$(KDP) | $R_{42}$:8.6 | $d_{42}$:2.4 | $d_{t42}$:11 | 1.49 |
| $KD_2PO_4$(DKDP) | $r_{41}$:8.8 | $d_{41}$:2.1 | $d_{t42}$:12 | 1.49 |
| $BaTiO_3$ | $R_{33}$:28 | $d_{33}$:22 | $d_{t33}$:232 | 2.4 |
| $KNbO_3$ | $R_{33}$:64 | $d_{33}$:76 | $d_{t33}$:382 | 2.21 |

It is believed that this is because the frequencies for causing an electric field differ significantly between r and d. That is, d has a non-linear response in an optical frequency (~THz) region, while r has a non-linear response in a DC region.

Then, Expression (2) is empirically introduced with consideration of frequency response of an electric field which causes optical non-linearity.

$$d=(1/5)|n^4 \times r/4| \tag{2}$$

By using Expression (2), it is possible to obtain a constant d which relatively coincides with a measured value.

When the value for d is calculated by using the above expression, in which the refractive index of $SiO_2$-based glass material with Ge doped is n=1.48, based on the EO coefficient value, i.e., r=6pm/V, which was obtained through the above UV-excited poling, substantially d=1.4pm/V is obtained. As a constant d for quartz is approximately $d_{qz}$=0.5pm/V , it is assumed that $d/d_{qz}$ of $SiO_2$-based glass material with Ge doped disclosed in the above document is approximately $d/d_{qz}$=2.8 .

The value $d/d_{qz}$=2.8 is remarkably smaller than the value $d/d_{qz}$=6.4 for $LiNbO_3$, or the crystalline material often used as practicable optical functional device. Therefore, it is concluded that the second-order optical non-linearity of the above $SiO_2$-based glass material with Ge doped is not sufficient for a material to be used for an optical functional device.

Thus, glass material having higher second-order optical non-linearity is desired. In addition, an electric field actually applied in the UV-excited poling in the above document is $8x10^5$V/cm. Since dielectric breakdown will be caused with $SiO_2$-based glass material with Ge doped at around $10^6$V/cm, the above electric field has only a slight margin, and thus may possibly cause dielectric breakdown. From this point of view, the lowest possible applied electric field is also desired.

DISCLOSURE OF THE INVENTION

The present invention has been conceived in view of the above problems and aims to provide $SiO_2$-based glass material having an EC coefficient equivalent to that of $LiNbO_2$ which is crystalline material, and also such large optical non-linearity that allows substitution for a practicable crystalline material, and a method for manufacturing the same. The present invention further aims to obtain a material having sufficient second-order optical non-linearity through UV-excited poling using a relatively low applied electric field.

According to one aspect of the present invention, there is provided a $SiO_2$-based glass material which includes a portion having second order optical non-linearity. In the above material, the portion having second order optical non-linearity contains Ge whose density exceeds 12 mol% and is less than or equal to 30 mol%, and the second order optical non-linearity has a magnitude equal to 2.5pm/V or over as a non-linearity constant d.

Further, in the above material, the density of Ge is equal to 15 mol% or over.

Still further, in the above material, the $SiO_2$-based glass material is an optical fiber or a plane waveguide, and the portion having second order optical non-linearity is a core portion of the optical fiber or the plane waveguide.

According to another aspect of the present invention, there is provided a method for manufacturing a $SiO_2$-based glass material having second order optical non-linearity. The above method comprises the steps of: preparing a $SiO_2$-based glass material having a portion whose Ge density exceeds 12 mol% and is less than or equal to 30 mol%; and performing UV-excited poling by irradiating a relevant portion with UV rays while applying an electric field thereto, whereby second order optical non-linearity is imparted to the relevant portion.

Further, in the above method, the Ge density is equal to 15 mol% or over.

Still further, in the above method, a method for the electric field has a magnitude equal to $1x10^5$Vcm the electric field has a magnitude equal to $1x10^5$V/cm or over and no larger than $8x10^5$V/cm.

As described above, according to the present invention, the Ge density of $SiO_2$-based glass material is set so as to exceed 12 mol%. Then, second-order optical non-linearity of 2.5pm/V or more can be imparted, as an EO coefficient, to $SiO_2$-based glass material when performing UV-excited poling with respect to the $SiO_2$-based glass material even with an applied electric field in a range between $1x10^5$V/cm and less than $8x10^5$V/cm. Therefore, $SiO_2$-based glass material having sufficient second-order optical non-linearity can be obtained while preventing dielectric breakdown.

BRIEF DESCRIPTION OF THE DRAWINGS

Fig. 1 is a front sectional view showing a structure according to a preferred embodiment.

Fig. 2 is a side view showing a structure according to the preferred embodiment.

Fig. 3 is a graph showing the relationship between an applied electric field and obtained optical non-linearity.

Fig. 4 is a graph showing the relationship between GE density and obtained optical non-linearity.

Fig. 5 is a perspective view showing a structure of a device used in an experiment.

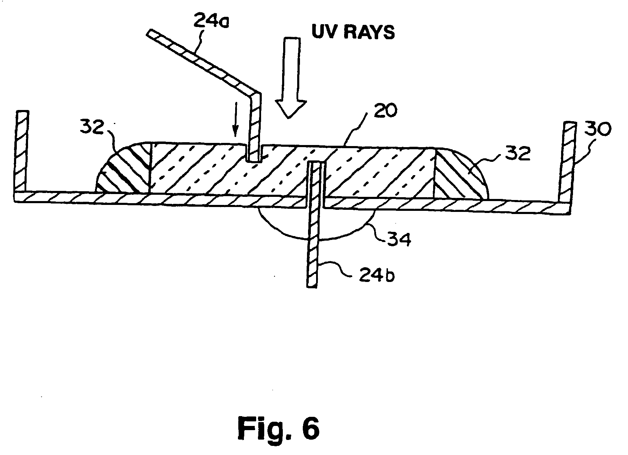

Fig. 6 is a schematic front view showing a structure of the device used in the experiment.

## BEST MODE FOR CARRYING OUT THE INVENTION

A preferred embodiment of the present invention (hereinafter referred to as an embodiment) will be described with reference to the drawings.

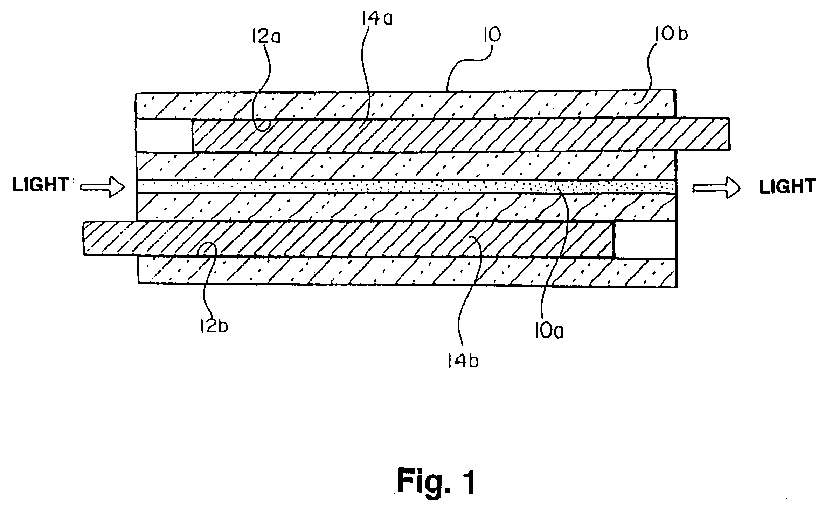

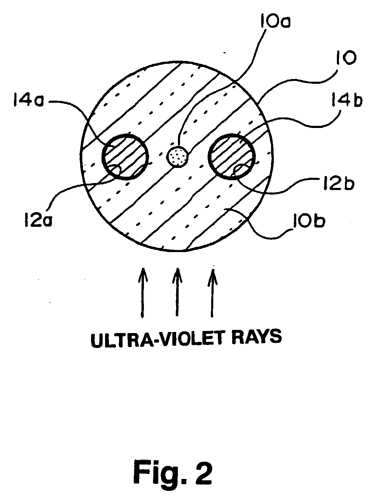

Figs. 1 and 2 are views schematically showing a structure of an optical functional element using $SiO_2$-based glass material according to the present invention. An optical fiber 10 formed of cylindrically drawn silica glass ($SiO_2$) and doped with, for example, germanium (Ge) includes a light conducting core 10a at its center portion where refractive index is adjusted, and a clad section 10b located at the surrounding portion.

A pair of side holes 12a and 12b are formed in the clad section 10b, and aluminum wire electrodes 14a and 14b are inserted therein. As can be seen from the figures, the electrodes 14a and 14b are provided opposite to each other with the core section 12a interposed therebetween.

Here, the core section 10a is formed such that the second-order optical non-linearity thereof has the magnitude of 2.5pm/V or over. As a result, the Ge density at the core section 10a is set so as to exceed 12 mol%. That is, by thus setting the Ge density, second-order optical non-linearity with the magnitude being as large as 2.5 pm/V or more can be imparted in UV-excited poling. It should be noted that the Ge density at the core section 10a is set at 30 mol% or below for enabling fiber drawing of the optical fiber 10.

[Manufacturing Method]

The above grating element is manufactured as follows. First, an optical fiber having the electrodes 14a and 14b inserted into the side holes 12a and 12b is prepared. The optical fiber 10 is doped at its center portion with Ge at 12 mol% or over and less than 30 mol%. To manufacture the optical fiber 10, for example, preforms are sequentially laminated while doping different amounts of Ge, to thereby form a portion corresponding to a core section, and fiber drawing is applied while heating.

The optical fiber 10 has a diameter of 200 $\mu$m, the side holes 12a and 12b have a diameter of approximately 40 $\mu$m, the electrodes 14a and 14b have a diameter of approximately 40 $\mu$m and a length of approximately 4 cm and are located with a distance of 8-10 $\mu$m between them, and the optical fiber has a length of about 10 cm.

Here, as shown in Fig. 1, the electrodes 14a and 14b are inserted into the side holes 12a and 12b, respectively, from different ends, and each of the electrodes has an end protruding only in a direction different from each other, so as to prevent electric discharge between the electrodes. The dielectric breakdown voltage of air is about $10^4$V/cm, and application of an electric field greater than this voltage to the core section 10a requires a longest possible path for air to intervene. The structure of the electrodes 14a and 14b shown in Fig. 1 makes it possible to achieve application of a high electric field to the core section 10a.

A voltage is applied between the electrodes 14a and 14b. The voltage is approximately 700-800 V. As a result, an electric field of approximately $1 \times 10^5$-$8 \times 10^5$V/cm is applied to the core section 10a. Under such circumstances, the core section 10a is irradiated with ultra-violet radiation using a pulsed ArF excimer laser (193 nm wavelength). The laser has an energy density of approximately 36 mJ/cm$^5$ and a pulse repetition rate of approximately 10 pps (pulse/second), and irradiating for a period of approximately 10-30 minutes.

With the above UV-excited poling, second-order optical non-linearity as large as 2.5 pm/V or over can be imparted to the core section 10a.

[Ge density and Magnitude Electric Field]

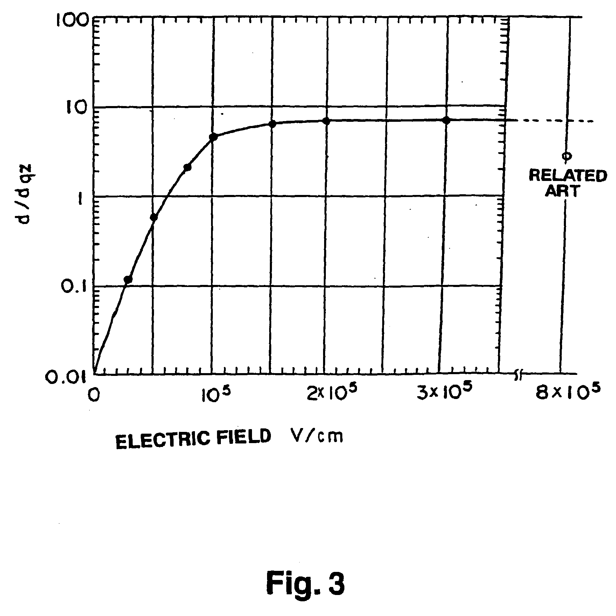

Here, in this embodiment, the Ge density in the core section 10a is set at 12 mol% or over. This is because, according to the research by the inventors of the present invention, larger optical non-linearity can be obtained in UV-exciting poling for a larger applied electric field. However, as shown in Fig. 3, this effect is saturated with an electric field of a certain magnitude or over, and no larger optical non-linearity is obtained.

The magnitude of an electric field at which the optical non-linearity is saturated depends on a Ge density. That is, with a higher Ge density, non-linearity to be achieved with a lower electric field is saturated. With a Ge density of 12 mol%, non-linearity is yet to be saturated with an electric field of $10^6$V/cm. A higher electric field seems to be needed. However, application of an electric field of $10^6$V/cm or over will cause dielectric breakdown to the material ($SiO_2$ glass). Thus, it is desired to apply a lower electric field than $10^6$V/cm.

Conventionally, the above relation has not been recognized at all. Therefore, a highest possible electric field has been applied to impart a largest possible optical non-linearity. The present invention is characterized by setting an optimum Ge density for imparting maximum optical non-linearity to a material. The material disclosed in the document introduced in the section for Background Art does not have sufficient optical non-linearity as the optical non-linearity is yet to be saturated.

Here, a Ge density is desired to exceed 12 mol%. With a Ge density of 12 mol% or below, the magnitude of optical non-linearity to be imparted in UV-excited poling is not sufficiently saturated with an applied electric field within a range with dielectric breakdown being prevented. With a Ge density of 15 mol% or over, saturated optical non-linearity can be reliably obtained in UV-excited poling with an applied electric field within a range with dielectric breakdown being prevented. In view of this, a Ge density of 15 mol% or over is particularly desired.

With a Ge density of 30 mol% or over, an optical fiber having a Ge-containing $SiO_2$ glass at its center portion is hardly wiredrawn. Therefore, a Ge density at 30 mol% or lower is desired.

Further, an applied electric field for UV-excited poling is desired to be set at $1 \times 10^5$ V/cm or over for the Ge density in the above range. With an electric field lower than this value, it is assumed that obtained optical non-linearity may not be saturated. Still further, the electric field is desired to be set at $8 \times 10^5$ V/cm or lower because dielectric breakdown may more likely be caused with a larger electric field than this value.

[Others]

In the above example, optical non-linearity is imparted to the core section 10a of the optical fiber 10. With this arrangement, the characteristics of the core section 10a can be changed by applying a predetermined electric field to the electrodes 14a and 14b, enabling optical switching or the like. Also, it is desired to use a material of the present invention in forming a grading section for the formation of a grading element and a wavelength switch by repeatedly forming portions with imparted optical non-linearity in the core portion 10a with predetermined intervals, as proposed in JP Application No. Hei 8-212323, 8-244966, or other applications, and in forming a plane waveguide, as proposed in JP application No. Hei 8-244965. Also, the material of the present invention can be preferably applicable to various optical functional elements such as an SGH element. Further, an optical fiber containing an electrode of the present invention is desired to be wiredrawn together with a glass material, as disclosed in JP Application No. Hei 8-244964. Also, Ge may be desirably doped in the form of $GeO_2$.

[Examples]

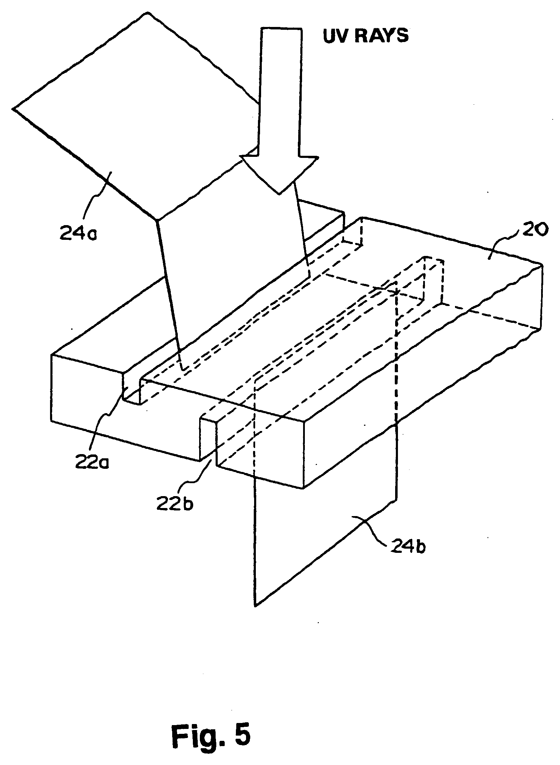

A test piece 20 formed of $SiO_2$-based glass in size 10 x 10 x 1 mm, as shown in Fig. 5, is prepared. The Ge density of the test piece 20 is 15 mol%.

The test piece 20 has a pair of electric guide slots 22a and 22b formed thereon in parallel, each having a width of 0.2 mm (the size 10 mm). A pair of electric panels 24a and 24b (made of aluminum) are inserted into the pair electrode guide slots 22a and 22b, a predetermined voltage is applied across the pair of electrode panels 24a and 24b to thereby apply a predetermined electric field to a glass material present between the electrodes 24a and 24b. Here, the pair of electrode panels 24a and 24b are set apart by 1 mm. It should be noted that in actual fact, the test piece 20 is placed on a faceplate 30 made of insulative material, and covered around the four surfaces thereof by insulative grease. The electrode panels 24b to be inserted from the below is inserted into the slit formed on the face plate 30, the electric panels 24a and 24b to be inserted from the below are fixed by means of elastic adhesive agent 34. Such a material facilitates formation of a plane waveguide.

With the above material, the voltage to be applied between the electrode panels 24a and 24b is changed to thereby apply various electric fields to the glass material between the electrodes, and ultra-violet is irradiated there for UV-excited poling. The optical non-linearity of the resultant glass material is measured. The results are shown in the form of $d/d_{qz}$ in Fig. 3.

As is obvious from the figure, with $SiO_2$-based glass with Ge density of 15 mol%, optical non-linearity is substantially saturated with an electric field of $1 \times 10^5$ V/cm. It should be noted, in this figure, that the results of UV-excited poling with Ge density of 12 mol%, which are disclosed in the above mentioned document (a related art), are also shown. It is understood that optical non-linearity which is embodied in the related art is smaller than that of the present invention despite application of a high electric field.

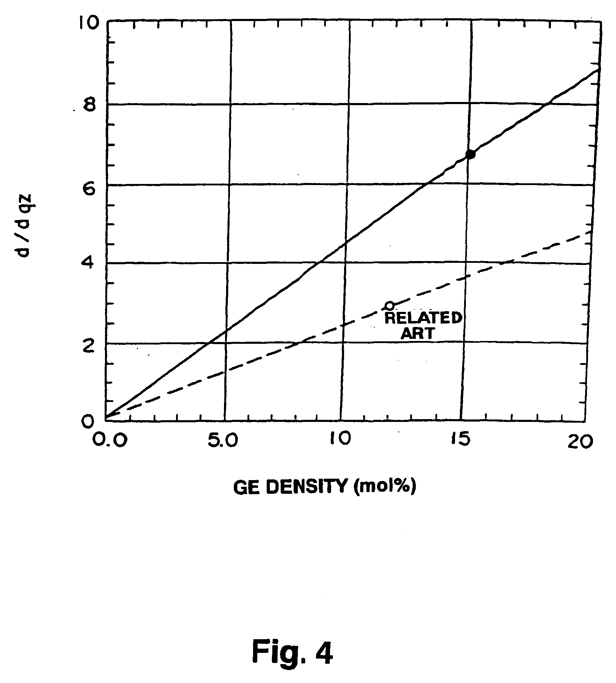

Fig. 4 shows the relation between the saturate value of optical non-linearity with respect to Ge density. As is shown, the magnitude of optical non-linearity increases with an increase of Ge density. In the above related art, it is assumed that optical non-linearity is yet to be saturated because of a low Ge density despite application of an electric field as high as $8 \times 10^5$ V/cm.

As described above, according to the present invention, sufficient optical non-linearity can be obtained even with the application of a relatively low electric field in UV-excited poling, through the use of $SiO_2$-based glass material

with relatively high Ge density. As a result, optical non-linearity equivalent to that of crystalline material can be obtained, while reliably preventing dielectric breakdown.

INDUSTRIAL APPLICABILITY

The present invention can be applied to the formation of various optical functional elements, such as optical switches for use in an information transmission system using light, such as an optical fiber.

**Claims**

1. A $SiO_2$-based glass material including a portion having second order optical non-linearity,
   wherein

   the portion having second order optical non-linearity contains Ge whose density exceeds 12 mol% and is less than or equal to 30 mol%, and
   the second order optical non-linearity has a magnitude equal to 2.5pm/V or over as a non-linearity constant d.

2. A material according to claim 1, wherein

   the density of Ge is equal to 15 mol% or over.

3. A material according to claim 1 or 2, wherein

   the $SiO_2$-based glass material is an optical fiber or a plane waveguide, and
   the portion having second order optical non-linearity is a core portion of the optical fiber or the plane waveguide.

4. A method for manufacturing a $SiO_2$-based glass material having second order optical non-linearity, comprising the steps of:

   preparing a $SiO_2$-based glass material having a portion whose Ge density exceeds 12 mol% and is less than or equal to 30 mol%; and
   performing UV-excited poling by irradiating a relevant portion with UV rays while applying an electric field thereto,
   whereby second order optical non-linearity is imparted to the relevant portion.

5. A method according to claim 4, wherein

   the Ge density is equal to 15 mol% or over.

6. A method according to claim 4 or 5, wherein

   the electric field has a magnitude equal to $1 \times 10^5$V/cm or over and no larger than $8 \times 10^5$V/cm.

**Amended claims under Art. 19.1 PCT**

1. (Amended) A $SiO_2$-based glass material including a portion having second order optical non-linearity,
   wherein

   the portion having second order optical non-linearity which has been imparted in UV-excited poling in which UV rays irradiate while an electric field is applied, contains Ge whose density exceeds 12 mol% and to less than or is equal 30 mol%, and
   the second order optical non-linearity has a magnitude equal to 2.5pm/V or over as a non-linearity constant d.

2. A material according to claim 1, wherein

   the density of Ge is equal to 15 mol% or over.

3. A material according to claim 1 or 2, wherein

the $SiO_2$-based glass material is an optical fiber or a plane waveguide, and
the portion having second order optical non-linearity is a core portion of the optical fiber or the plane waveguide.

4. A method for manufacturing a $SiO_2$-based glass material having second order optical non-linearity, comprising the steps of:

preparing a $SiO_2$-based glass material having a portion whose Ge density exceeds 12 mol% and is less than or equal to 30 mol%; and
performing UV-excited poling by irradiating a concerned portion with UV rays while applying an electric field thereto,
whereby second order optical non-linearity is imparted to the portion.

5. A method according to claim 4, wherein

the Ge density exceeds 15 mol%.

6. A method according to claim 4 or 5, wherein

the electric field has a magnitude equal to $1 \times 10^5$V/cm or over and no larger than $8 \times 10^5$V/cm.

**Fig. 1**

**Fig. 2**

**Fig. 3**

**Fig. 4**

UV RAYS

24a

20

22a

22b

24b

**Fig. 5**

**Fig. 6**

**INTERNATIONAL SEARCH REPORT**

| International application No. |
|---|
| PCT/JP97/03470 |

**A. CLASSIFICATION OF SUBJECT MATTER**

Int. Cl$^6$ G02F1/35, G02F1/37

According to International Patent Classification (IPC) or to both national classification and IPC

**B. FIELDS SEARCHED**

Minimum documentation searched (classification system followed by classification symbols)

Int. Cl$^6$ G02F1/35, G02F1/37, G02B6/12, C03C4/00

Documentation searched other than minimum documentation to the extent that such documents are included in the fields searched

| Jitsuyo Shinan Koho | 1940 – 1996 | Jitsuyo Shinan Toroku |
|---|---|---|
| Kokai Jitsuyo Shinan Koho | 1971 – 1997 | Koho 1996 – 1997 |
| Toroku Jitsuyo Shinan Koho | 1994 – 1997 | |

Electronic data base consulted during the international search (name of data base and, where practicable, search terms used)

JICST File on Science and Technology

**C. DOCUMENTS CONSIDERED TO BE RELEVANT**

| Category* | Citation of document, with indication, where appropriate, of the relevant passages | Relevant to claim No. |
|---|---|---|
| PY | Journal of the Spectroscopical Society of Japan, Vol. 45, No. 6, 1996, Takumi Fujiwara, Masahide Takahashi, Akira Ikushima, "Optical fiber grating  Photorefractive effect and optical nonlinearity of glass material (in Japanese)" p. 292-304 | 1 – 6 |
| Y | ELECTRON. LETT., Vol. 31, No. 7, March 1995, T. Fujiwara, et al., "Electro-optic modulation in germanosilicate fibre with UV-excited poling" p. 573-575 | 1 – 6 |
| Y | OPTICS LETTERS, Vol. 13, No. 7, July 1988, M.V. Bergot, et al., "Generation of permanent optically induced second-order nonlinearities in optical fibers by poling", p. 592-594 | 1 – 6 |

[X] Further documents are listed in the continuation of Box C.     [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| December 15, 1997 (15. 12. 97) | December 24, 1997 (24. 12. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP97/03470 |

C (Continuation).   DOCUMENTS CONSIDERED TO BE RELEVANT

| Category* | Citation of document, with indication, where appropriate, of the relevant passages | Relevant to claim No. |
|---|---|---|
| Y <br> A | JP, 01-217330, A (The Furukawa Electric Co., Ltd.), <br> August 30, 1989 (30. 08. 89), <br> Full text <br><br> (Family: none) | 1 - 3 <br> 4 - 6 |

Form PCT/ISA/210 (continuation of second sheet) (July 1992)